# EUROPEAN PATENT APPLICATION

(11) **EP 1 528 451 A1**
(43) Date of publication of application: **04.05.2005**
(21) Application number: 03078389.8
(22) Date of filing: 27.10.2003
(51) Int. Cl.: G06F 1/00

(54) **Authentication framework for smart cards**

(71) Applicant: Axalto S.A., 92120 Montrouge (FR)
(72) Inventor: Vassilev, Apostol c/o Schlumberger Systèmes, 92120 Montrouge (FR); Hutchinson, Michael D. c/o Schlumberger Systèmes, 92120 Montrouge (FR)
(74) Representative: Cassagne, Philippe M.J.

(57) **Abstract**

A smart card authentication framework may include a card application applet (CAA), an authentication policy applet (APA), and an authentication technology applet (ATA). The CAA may provide a protected service for a user. The APA may provide an authentication-technology-independent user validation service for the CAA. The ATA may provide a technology-specific authentication service. In one embodiment, the CAA provides a first external interface, the ATA provides a second external interface and a first internal interface, and the APA provides a second internal interface. The ATA may receive a host request for user authentication via the second external interface, and the ATA may process the authentication request without participation by the CAA. The CAA may communicate with the APA via the first internal interface to determine whether the user is currently validated. If so, the CAA may provide the protected service for the host via the first external interface.

## Description

### TECHNICAL FIELD OF THE INVENTION

The present invention relates in general to data processing systems. In particular, the present invention relates to smart cards and an authentication framework that supports validation of smart card users.

### BACKGROUND OF THE INVENTION

User authentication is one of the critical elements guaranteeing the security and integrity of public key infrastructure (PKI) information technology (IT) solutions based on smart cards. Recent progress in smart card technology, in particular the rapid gain of popularity of Java Card technology (JCTECH) among providers and customers of IT security solutions, has created new opportunities and challenges for implementation of flexible and secure user authentication in the context of the Java Card Virtual Machine (JCVM).

The classical approach to smart card user authentication is based on a personal identification number (PIN). The JCVM allows applications (applets) instantiated on the card to implement their own user authentication schemes for protecting applet data and functionality from access by unauthorized individuals. The typical implementation is based on the PIN class from the Java package known as javacard.framework. The javacard.framework package provides a framework of classes and interfaces for the core functionality of a Java Card applet. With javacard.framework, an applet typically contains an instance of a PIN object that the applet uses to verify and maintain the user credentials.

### SUMMARY OF THE INVENTION

The present invention relates to a generalized authentication framework for a smart card. The smart card may include processing resources such as memory and an instruction processor. The memory may contain a card application applet (CAA), an authentication policy applet (APA), and an authentication technology applet (ATA). The CAA may provide a protected service for a user. The APA may provide a technology-independent authentication service for the CAA. The ATA may provide a technology-specific authentication service.

In one embodiment, the CAA may communicate with the APA via an internal interface of the APA to determine whether the user is currently validated. If the user is currently validated, the CAA may provide the protected service for the host application via an external interface of the CAA for host applications. If the user is not currently validated, the CAA may send to the host a list of one or more ATAs required for user authentication. The ATA (or ATAs) may then receive a host request(s) for user authentication via an external interface(s) of the ATA(s), and the ATA(s) may process the authentication request(s) without participation by the CAA. Additional interfaces may also be used for various purposes, as described below.

For instance, the smart card may utilize a Java card runtime environment (JCRE). The JCRE may provide an application firewall that separates the CAA, the APA, and the ATA. The first and second external interfaces may be Java application protocol data unit (APDU) interfaces, and the internal interface may be a shareable interface. Alternatively, the communications may utilize different protocols. For example, the external interface may be based on Remote Method Invocation.

Alternative embodiments of the present invention relate to associated processes for validating smart card users according to the generalized authentication framework, as well as program products implementing such processes.

One or more example embodiments of the present invention are described below. The disclosed embodiments provide many advantages, including a simplification of the design requirements for functional applications such as CAAs, as well as the ability for security configurations or even complete authentication applications, such as ATAs, to be modified or replaced without the need to modify or replace associated functional applications. The disclosed framework makes such alterations possible by allowing functional applications to disregard many of the particular requirements associated with individual authentication applications, and by providing a framework within which hosts may communicate directly with authentication applications.

According to one particular implementation, a realization may consist of (a) an APA with authentication policies for a set of roles (e.g., user, administrator, etc.) and respective security configurations (e.g., providing that users must authenticate with a PIN, whereas administrators must authenticate with a PIN and a fingerprint), (b) a CAA with roles and services protected by corresponding security configurations, and (c) one or more ATAs holding user identities for the security configurations established in the APA. The CAA may grant access to protected services to a host application on behalf of a role, based upon assurance from the APA that the user acting in the particular role is authenticated with respect to the corresponding security configuration. The configuration of authentication services in the APA is independent of the specific technologies for verifying user identities employed by the available ATAs on the card. According to this implementation, the framework embodies a three-tier architecture identifying consumers of authentication services on card and two levels of providers of such services: authentication technology-independent services and technology-dependent services. The disclosed authentication framework may therefore be considered a generalized authentication framework.

For instance, if an administrator wanted to replace a PIN based ATA with a fingerprint based one, the administrator could implement that change by installing the new ATA and updating certain data in the APA. No changes to the CAA or CAAs which use that ATA would be required.

In doing the change, the code of the APA also does not need to change. The data it contains may simply be updated to reflect the switch to the new ATA. Both the CAA and the APA do not need to know anything about the specifics of data exchange between the ATA and the host application that typically allows the user identification record (e.g., a PIN or a biometric template) to be sent to the ATA for verification.

### BRIEF DESCRIPTION OF THE DRAWINGS

A more complete understanding of the present invention and advantages thereof may be acquired by referring to the appended claims, the following description of one or more example embodiments, and the accompanying drawings, in which:
FIGURE 1 depicts a block diagram of an example embodiment of a smart card according to the present invention in communication with a host;
FIGURE 2 depicts a block diagram that illustrates various software components in an example embodiment of a smart card according to the present invention;
FIGURE 3 depicts a flowchart of an example embodiment of a process for performing user validation in a smart card according to the present invention;
FIGURE 4 depicts a block diagram of an example embodiment of a smart card according to the present invention with a more complex set of software components;
FIGURE 5 illustrates an example embodiment of a master security configuration table according to the present invention;
FIGURE 6 illustrates an example embodiment of a card application applet validation table according to the present invention;
FIGURE 7 depicts an alternative example embodiment of a master security configuration table according to the present invention; and
FIGURE 8 depicts an example embodiment of a process state table according to the present invention.

### DETAILED DESCRIPTION

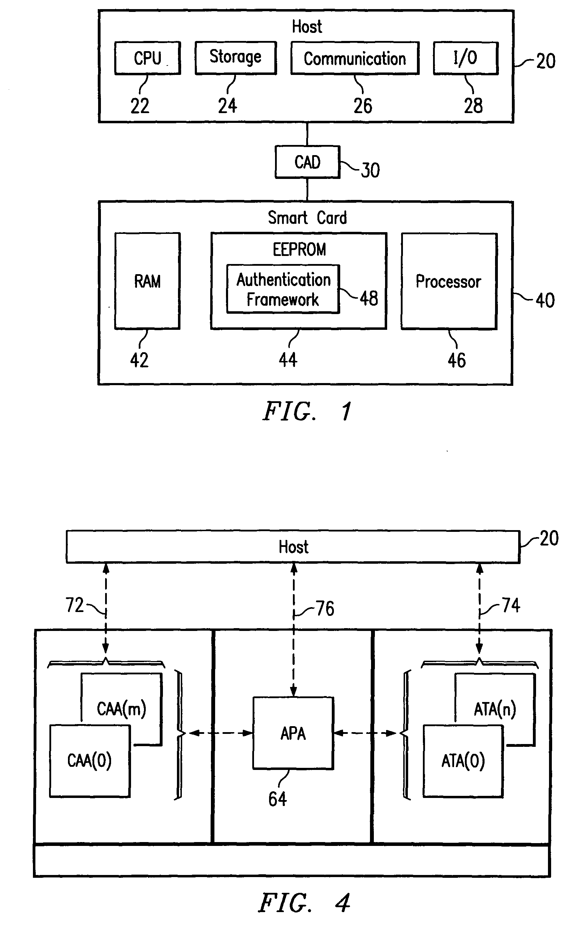

This disclosure describes one or more example embodiments of an authentication framework for smart cards according to the present invention, with reference to data processing systems (e.g., smart cards and host computer systems) and program products or software (e.g., computer instructions, data structures, and associated data items), as well as related methods or processes for handling information. In particular, FIGURE 1 depicts a block diagram that shows a smart card 40 communicating with a host 20 via a card acceptance device (CAD) 30. Host 20 may be any suitable data processing system, including, without limitation, a personal computer or similar system containing one or more central processing units (CPUs) 22 and storage components 24, such as memory and one or more disk drives. Storage components 24 may include volatile data storage devices such as random access memory (RAM), as well as non-volatile data storage devices such as read only memory (ROM). For purposes of this disclosure, the term ROM may be used in general to refer to any non-volatile memory storage device, including non-volatile memory (NVRAM), flash memory, electrically erasable programmable read only memory (EEPROM), etc. Host 20 may also include one or more communication adapters 26 for interfacing with external devices or systems, and various input/output (I/O) facilities 28 such as a keyboard, a mouse, a display device, a fingerprint scanner, etc.

Smart card 40 may include various processing resources, such as RAM 42, ROM 44, and a processor 46. As described in greater detail below, various software modules or components may be encoded or stored in ROM 44. Those components may include sets of computer instructions and data objects such as tables, etc. According to an example embodiment of the present invention, certain computer instructions and data objects in ROM 44 work together to provide an authentication framework 48.

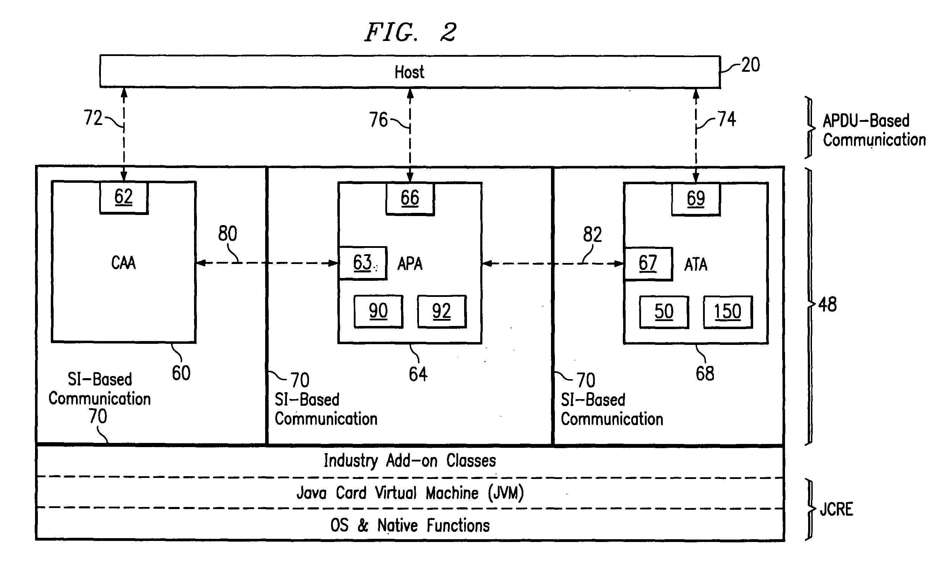

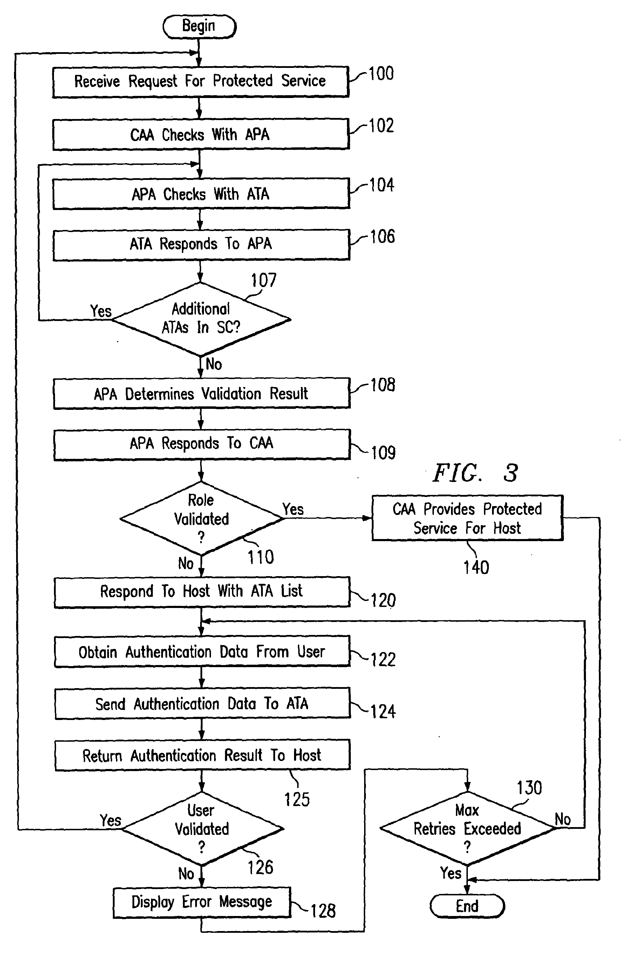

FIGURE 2 depicts a block diagram that illustrates components of authentication framework 48 in greater detail. As illustrated, authentication framework 48 provides a three-tier architecture that includes a card application applet (CAA) 60, an authentication policy applet (APA) 64, and an authentication technology applet (ATA) 68. A description of how the various components of authentication framework 48 may work together to validate a smart card user is provided below, with reference to FIGURE 3.

For purposes of this document, the term "authentication" generally refers to the technology specific function of comparing candidate authentication data with predetermined authentication data to generate an authentication result. According to the disclosed authentication framework, authentication operations are typically performed by technology specific authentication applications. By contrast, the term "validation" generally refers to the function of determining whether the current validation state satisfies predetermined requirements for providing a service. According to the disclosed authentication framework, CAA 60 may be designed to use the technology independent concept of validation, and APA 64 may implement the security policies that map particular validation roles to specific authentication requirements.

In the example embodiment, CAA 60, APA 64, and ATA 68 may be implemented as Java applets. For instance, CAA 60, APA 64, and ATA 68 may be implemented as instances of respective application objects in a Java card virtual machine (JCVM) in a version 2.1 or later Java card environment. Smart card 40 may provide a Java card runtime environment (JCRE) that protects system integrity by providing a JCRE firewall 70 to separate CAA 60, APA 64, and ATA 68. Different environments may be used in alternative embodiments.

For purposes of this disclosure, the term "card application applet" (CAA) refers to an application or applet on a smart card designed to require user validation for access to protected services (possibly including protected data). A CAA may also be referred to as a functional application or applet (FA). Typically, a CAA designed for a generalized authentication framework according to the present invention defines roles (e.g., user, administrator, security officer, etc.) and assigns certain privileges to them (e.g., a user can access the exchange private key, a security officer can unblock the PIN, etc.). Examples of CAA's are a bank wallet applet or an applet providing services required by a smart card based PKI system (e.g., certificate storage, public key encryption, signature, etc.).

For purposes of this disclosure, the term "authentication technology applet" (ATA) refers to an application or applet that provides specific technology for holding and verifying the user's identity. Examples of these are applets providing PIN verification, fingerprint match, etc.

For purposes of this disclosure, the term "authentication policy applet" (APA) refers to an application or applet that provides a link or bridge between roles defined by CAAs and user identities (e.g., authentication data) contained by ATAs. The APA is responsible for providing authentication security policy services to the CAAs on the smart card. The APA generally bridges a CAA with one or more ATAs, in order to provide authentication services, according to the security policy established on the card, for the roles defined in the CAA. As described in greater detail below, the APA may also interact with host applications. The APA may be considered the core element of the authentication framework on the smart card.

The card may be initialized so that the APA knows that the CAA will use the ATA for authentication, and the CAA knows about the APA and its public interface. However, the CAA does not need to know anything about the ATA.

In the example embodiment, authentication framework 48 may simplify the design requirements for functional applications. For the purposes of functional applications, the task of validating a user can be reduced to the basic Boolean question "is the user validated?" If yes, then the functional application should grant access to protected service. If no, the functional application should deny access.

Within authentication framework 48, the main functional specification of the functional application need not deal with the issues of what represents the user's identity (PIN, fingerprint, etc.) and how that identity is checked and maintained. Delegating the tasks of authenticating the user and maintaining an authentication policy simplifies the CAA design, implementation, and maintenance. Defining clean CAA/APA and APA/ATA interfaces provides the possibility to reconfigure and adopt new authentication technologies and policies without any changes to the CAA. User authentication specifics may be abstracted from the CAA into a separate applet, the ATA, which will be responsible for checking and updating the user identification record (e.g., a PIN or biometric data) based on the specific technology implemented by the applet.

A functional applet designer may easily build a CAA with several different security requirements. Each security requirement may be associated with a particular purpose or role (e.g., exchange key protection, signature key protection, large transaction shared secret, etc.) Naturally, security requirements may also vary from one CAA to another. Consequently, a role in one CAA for exchange key protection may be different from that role in another CAA. On the other hand, authentication framework 48 also allows multiple CAAs to use the same security configuration.

Authentication framework 48 may be used to implement many different kinds of security policies. For instance, authentication framework 48 may include a CAA capable of PKI certificate-based operations such as signing data, as well as an ATA capable of PIN verification. A host application may need the CAA to sign a data item or "blob" with a private key contained in the CAA. The CAA may have a signing interface available for host applications to call, and the CAA may contain an RSA key pair whose private key is protected by a PIN. That is, the user must be authenticated before the CAA will grant access to the key. Examples of some other types of security policies that framework 48 can support are described below after the discussion of FIGURE 3.

As illustrated in FIGURE 2, CAA 60 may include an external interface 62 for interacting with external devices, such as host 20, as depicted by dotted line 72. In the example embodiment, external interface 62 may be a Java application protocol data unit (APDU) interface, for supporting APDU-based communications between CAA 60 and host 20. As described in greater detail below, host 20 may use external interface 62 to request services and receive responses from CAA 60.

APA 64 may include an internal interface 63 (e.g., a Java sharable interface object), and CAA 60 may communicate with APA 64 across JCRE firewall 70 via internal interface 63, as depicted by dashed line 80. ATA 68 may also include an internal interface 67 such as a Java sharable interface, and APA 64 may communicate with ATA 68 across JCRE firewall 70 via internal interface 67, as depicted by dashed line 82. As described in greater detail below, APA 64 may also include a master security configuration table 90 and a CAA validation table 92. APA 64 and ATA 68 may also provide respective external interfaces 66 and 69. Those external interfaces may also be APDU interfaces.

ATA 68 may contain authentication data 50 for use in authenticating smart card users. For instance, authentication data 50 may be a particular personal identification number (PIN) assigned to a particular user for authentication purposes.

Conventionally, host applications communicate with a single CAA on the smart card. The CAA may provide or delegate the authentication and validation of the user. Specifically, when a user enters candidate PIN data for authentication, the host transmits the candidate PIN data directly to the functional application (via the CAD), and the functional application may forward the candidate PIN data to a technology-specific authentication application. In this case, the functional application participates as the gateway for all communications between the host and the technology-specific authentication application.

One disadvantage of this conventional arrangement is that authentication details, such as how many digits are in the PIN or even what type of authentication technology is to be used, must be considered and coded for when developing the functional application. Furthermore, after a functional application had been installed on a smart card, it is difficult to alter the authentication strategy. For instance, it is not possible to replace the first technology-specific authentication application with a second technology-specific authentication application without modifying the functional application.

By contrast, as described in greater detail below, authentication framework 48 in the present disclosure provides for a generalized the authentication strategy, in which details of the authentication technology need not be considered when coding CAAs, and CAAs need not participate in communications between hosts and ATAs.

FIGURE 3 depicts a flowchart of an example embodiment of a process for validating users within authentication framework 48. That process may begin with smart card 40 positioned in CAD 30 and with CAA 60 having been selected as the active smart card application by host 20. At block 100, CAA 60 may receive a request for a particular service from host 20, such as a request for a private key signature to be added to a particular data item. CAA 60 may receive the request via external interface 62.

At block 102, CAA 60 may communicate with APA 64 via internal interface 63 to determine whether the requested service or function should be provided, based on the current user validation state. For example, internal interface 63 may provide a method that returns a validation result (i.e., the current validation state) to CAA 60, based on a specified role.

Additional methods provided by internal interface 63 may include the following:
- a method for resetting the validation state to false;
- methods for returning the security configuration or configurations associated with a specified role; and
- methods for adding and removing security configurations.
External interface 66 may also include one or more of those methods, such as the methods for adding and removing security configurations.

Referring again to block 102, the requested service may be associated in CAA 60 with a particular role, and CAA 60 may communicate that role to APA 64 via internal interface 63. CAA 60 may perform that operation in response to determining that the requested service is a protected service.

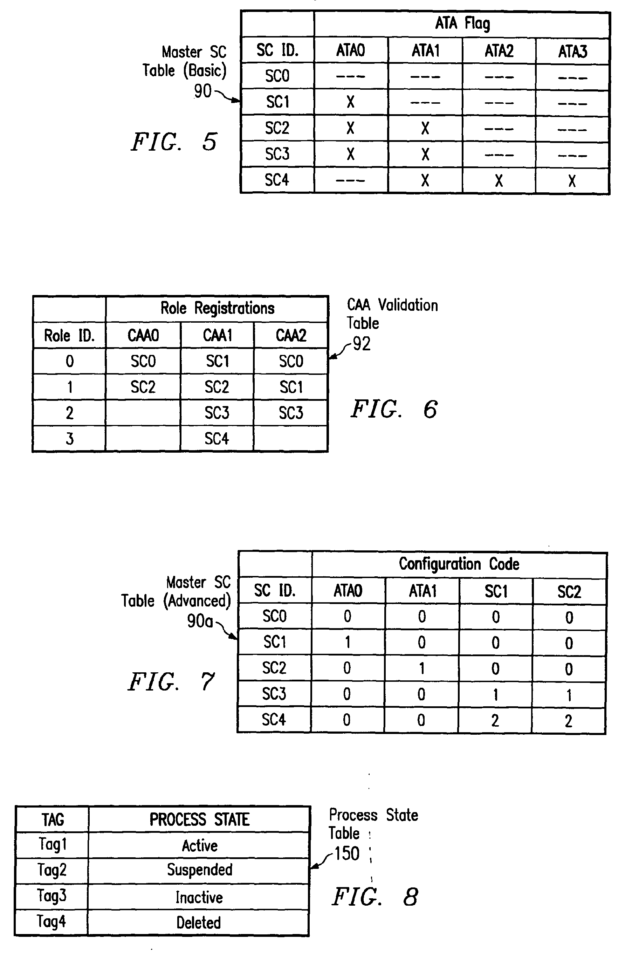

At block 104, in response to the communication from CAA 60, APA 64 may communicate with ATA 68 via internal interface 67 to determine whether the current user has been authenticated. Specifically, when APA 64 receives the communication from CAA 60, APA 64 may use an identifier for CAA 60 and the role identifier supplied by CAA 60 to identify a corresponding security configuration. As described in greater detail below in connection with FIGURES 5 and 6, APA 64 may consult master security configuration table 90 and CAA validation table 92 to determine the proper security configuration. The security configuration may specify the validation requirements associated with the given role, including the necessary ATA or applications to contact. APA 64 may then communication with the required ATA or ATAs.

Regarding ATA 68, internal interface 67 may provide a method that returns an authentication result (e.g., the current authentication state), based on a specified process identifier, such as the process identifier associated with the current session of interaction with host 20. Additional methods provided by internal interface 67 may include the following:
- a method for resetting the authentication state for a given process to false;
- a method for setting a suspend mode for a given process, to support requests for new processes;
- a method for returning a technology identifier (e.g., different ATAs may return different identifiers to identify different authentication technologies, such as PIN, fingerprint, voice, face, retina, etc.)
- a method for returning the name of the current user; and
- a method for returning an authentication score (e.g., for authentication technologies such as voice, fingerprint, and retina)

External interface 69 may also include one or more of those methods, such as the methods for returning the authentication result and for resetting the current authentication state to false. External interface 69 may also include other methods, such as a method for accepting candidate authentication data from hosts and returning authentication results.

FIGURE 4 depicts a more complex block diagram of authentication framework 48 to show that the framework supports multiple CAAs and multiple ATAs. In the illustrated embodiment, each ATA includes its own sharable interface and its own APDU interface. Each CAA also includes its own APDU interface. Nevertheless, a single APA 64 may serve as the bridge or gateway between the multiple CAAs and the multiple ATAs. For instance, smart card 40 may include one ATA for PIN authentication and another ATA for fingerprint authentication, and APA 64 may allow CAA 60 to use both of those ATAs.

FIGURE 5 depicts a basic example embodiment of master security configuration table 90. According to the example embodiment, that table includes rows for different security configurations (SCs). Each row may include a security configuration identifier (ID) and various flags for particular ATAs. The flags indicate which ATAs should be contacted for user validation. Each security configuration may be implemented as a list of object handles of ATAs responsible for authenticating users. The security configurations may be numbered from 0 to n, n<256, for example. FIGURE 5 shows five different security configurations (byte labels SC0 ... SC4) with four ATAs (ATAO ... ATA3). An "X" in the table indicates that the specific ATA's object handle is included in the list so that the ATA will be used for verifying credentials in the corresponding security configuration.

For example, the first row indicates that SC0 does not require user authentication from any of the ATAs. The second row specifies that SC1 requires user authentication from ATA0. The third row specifies that SC2 requires authentication from ATA0 and ATA1.

FIGURE 6 illustrates an example embodiment of CAA validation table 92. As illustrated, CAA validation table 92 specifies relationships between particular role identifiers, particular CAAs, and particular security configurations. For example, the first row specifies that role zero has been associated with CAA0, CAA1, and CAA2. Specifically, the second column in the first row specifies that the validation requirements associated with role zero for CAA0 are defined as SC0. Accordingly, APA 64 may ascertain the specific validation requirements for role zero of CAA0 by reference to the row for SC0 in master security configuration table 90. The third column in first row specifies that the user validation requirements for role zero of CAA1 are defined by SC1. Function application validation table 92 thus allows each CAA to implement multiple roles for different types of services, and to specify different security configurations for each of those roles.

For instance, FIGURE 6 illustrates two security roles for CAA0 (e.g., public access and personal exchange key protection), four roles for CAA1 (e.g., personal exchange key protection, personal signature key protections, corporate signature protection, and large transaction shared secret protection), and three roles for CAA2 (public access, personal signature key protection, and corporate signature protection). Each CAA may enumerate its security configurations from 0 to some integer n, n<256, for instance. Clearly, CAA0 and CAA1 share the same second security role implemented through SC2 from Table 1. Similarly, CAA0 and CAA2 share the configuration for their first role, and CAA1 and CAA2 share the configuration for their third role. CAA1 has a unique fourth security requirement (e.g., secret sharing) enabled with SC4.

A smart card issuer could establish the predefined security configurations in APA 64 before issuing smart card 40, for example using a host system in communication with APA 64 via external interface 66 as part of an initialization or personalization process, as indicated by dotted line 76. Once APA 64, the CAAs, and the ATAs are loaded and instantiated on the card, the personalization application may communicate only with APA 64 in order to configure the authentication policies on the card for every CAA. APA 64 may extract all related information from the CAAs and may present it to the host through APDU interface 66. In the example embodiment, APA 64 is loaded and instantiated prior to any other framework related applet on the card. In addition, APA 64 is instantiated in a security domain to ensure that APA 64 cannot be removed and replaced with an unauthorized applet. External interface 66 may also be used to apply subsequent security configuration changes.

FIGURE 7 depicts an alternative embodiment of a master security configuration table 90a that may be used to support more complex validation requirements, such as security configurations with disjunctive authentication requirements. For example, authentication framework 48 may be configured to authenticate a user based on authentication with any one of two or more ATAs.

As shown, master security configuration table 90a includes columns for ATAs and columns for security configurations. While master security configuration table 90 in FIGURE 4 provides for Boolean "AND" expressions to be configured with a set of ATAs for a given security configuration, master security configuration table 90a allows for more general security configurations. Those configurations may include the Boolean "OR" and "negate" operators. Furthermore, a security configuration, such as SC3 in the fourth row, can be defined in terms of other security configurations. APA 64 may be programmed to interpret security configurations in master security configuration table 90a as follows:
- a security configuration participating in the definition of another security configuration forms a binary "OR" expression with the other elements from the same row of the table. For example, SC3 = SC1 "OR" SC2 = CAA0 "OR" CAA1;
- a zero in master security configuration table 90A means that the corresponding CAA or security configuration does not contribute to the definition of that row;
- a one means that a CAA or security configuration participates; and
- a two means that the Boolean negative of the CAA or security configuration participates. For example, SC4 = (not) SC1 "OR" (not) SC2 = (not) TA0 "OR" (not) TA1.

Referring again to FIGURE 3, at block 104 after determining which ATA should be contacted, APA 64 communicates with that ATA (e.g., ATA 68) via sharable interface 67. At block 106, ATA 68 ascertains the current authentication state and responds to APA 64 via sharable interface 67 with a Boolean authentication result.

At block 107, APA 64 may determine whether the security configuration requires contacting additional ATAs. For example, a security configuration may require user authentication from multiple applications (e.g., PIN authentication and fingerprint authentication). If additional ATAs should be contacted, the process may return to block 104 with additional communications transpiring as described above. Otherwise, the process may pass to block 108, which depicts APA 64 determining a validation result, based on the authentication results received from the ATAs and the validation requirements specified in the authentication framework tables for the given role and CAA. At block 109, APA 64 responds to CAA 60 via internal interface 63 with the validation result. If the result is negative, that response may include a list of the ATAs belonging to the pertinent security configuration.

At block 110, CAA 60 may use the validation result to determine whether the role required for the requested service has been validated. At block 140, if the validation result is positive, CAA 60 may provide the requested service (e.g., signing the data with the private key signature and returning the result in an APDU response to host 20), and the process may then end. However, if the role has not been validated, CAA 60 may respond to host 20 with an APDU response indicating that validation is required and providing a list of the ATAs required for user validation.

For example, the list of ATAs may be a list of one or more application identifiers (AIDs), such as an AID for ATA 68. In response to receiving the list, host 20 may obtain authentication data from the user, as shown at block 122. For example, the host may communicate with ATA 68 via external interface 69 to determine the type of authentication data required and may then prompt the user to enter a PIN, to place a finger on a scanner for a fingerprint scan, etc., as appropriate. At block 124, host 20 may send the authentication data to ATA 68 via external interface 69.

At block 125 ATA 68 compares the candidate authentication data with authentication data 50 to determine an authentication result and returns the authentication result to host 20 via external interface 69. At block 126, host 20 determines whether the user has been validated. If so, the process returns to block 100 with host 20 transmitting a new request to CAA 60 for the private key signature. Processing may continue as described above. However, at block 126, if the user is not validated, host 20 may display an error message at block 128. Host 20 may then determine whether a maximum number of retries has been exceeded, as shown at block 130. If so, the process may end. Otherwise, the process may return to block 122 with host 20 again requesting authentication data from the user.

In an alternative process, after receiving the negative validation result and the list of ATAs from CAA 60, host 20 may contact each of those ATAs to authenticate the user before determining whether the user has been validated or communicating the service request to CAA 60 again. According to the above process, CAA 60 can provide secure access to the protected service of signing data with a private key without participating in the authentication communications between host 20 and ATA 68.

Other security policies that can be supported by APA 64 for CAA 60 or for other functional applications in smart card 20 may include a policy for unblocking a PIN or biometric identifier record (BIR). The policy for unblocking a PIN may be implemented in a smart card with one APA and one or more ATAs. The ATA may suspend or block attempts at user authentication following multiple unsuccessful user attempts to authentication with a PIN. The APA may associate a different role (e.g., security officer) with the service for unblocking the PIN, and the security officer may authenticate in that role against a second ATA to gain access to the unblocking services. The unblocking services may be provided as part of the functional application or as part of the second ATA. In one example implementation, authentication framework 48 may enforce such a policy with the following operations:
1. A host application requests to unblock the PIN/BIR contained in ATA1.
2. ATA1 utilizes the sharable interface of the APA to check if the role (unblock PIN/BIR) has been validated for the purposes of this operation.
3. The APA forwards this question to ATA2. Assuming that the user identity has not been verified, ATA2 responds with a negative answer.
4. ATA1 responds by providing information to the host enabling it to get the applet ID of ATA2.
5. The host application uses the information received to provide a proper user interface (UI) and enable the corresponding user to supply his/her credentials, which are passed to ATA2.
6. Assuming ATA2 verifies the user's unblock PIN/BIR, the host again requests to unblock the PIN/BIR to ATA1.
7. ATA1 utilizes the framework interfaces through the APA to check if ATA2 has verified the PIN/BIR.
8. ATA1 receives confirmation from the framework and unblocks its PIN/BIR.

Alternative courses:
a. Step 2: If ATAl's unblock PIN/BIR is not guarded by another applet within the framework but is contained inside ATA1, ATA1 will respond to the host appropriately to inform it of this special case.
b. Step 3: If under alternate course for step 2, the host simply supplies the unblock PIN/BIR to ATA1 to unblock after alternate step 2.
c. Steps 4 and 5: Not performed if under alternate course for step 2.
d. Step 6: If under alternate course for step 2, simply unblock the PIN if the verification in alternate step 3 succeeded.

Authentication framework 48 may also support a wide variety of other security policies, as well. For instance, authentication framework 48 may support a "secret sharing" security policy, in which the role associated with a certain service requires authentication from two users. In one example implementation, such a policy may be enforced with the following steps:
1. A host application requests access to protected data in the CAA.
2. Because the data is protected with a secret sharing scheme, the CAA utilizes the sharable interface of APA to check if the role (secret sharing access based upon multiple user identities) has been validated for the purposes of this operation.
3. The APA checks with the list of ATAs for the specified role. Assuming that the user identities have not been verified, the ATAs respond with a negative answer.
4. The APA passes a negative answer to CAA along with additional parameters which will allow the calling application to identify which ATAs are responsible for verifying the users' identities.
5. The CAA signals failure and forwards this information to the calling application.
6. The host application uses the information received to get through the CAA public interface the list AIDs for the of ATAs.
7. The host loops through the list of all required ATAs to do the following: the host determines the user ID from the ATA; the host arranges appropriate user interface (UI) for collecting the user identification record (e.g., PIN or fingerprint) and sends it to the appropriate ATA for verification.
8. Assuming the verifications are successful, the host application requests access to the protected data again.
9. The CAA checks with the APA if the required role (secret sharing based upon multiple user identities) is validated. The APA checks with each of the ATAs from the list corresponding to this role.
10. The ATAs respond positively, and the APA sends a positive answer back to the CAA.
11. Because all user identities have been authenticated, the CAA grants access to the protected data.

Alternative courses:
a. Step 3: all user ID's have been authenticated, so the process jump to step 10.
d. Step 7: the identification record verification failed for one or all users. Inform about this condition and take one of two possible actions on the host: repeat the process of verification or abandon it and subsequently abandon the data access attempt altogether.

Other types of supported policies may include security policies requiring two types of authentication (e.g., PIN and biometric) from a single user. For example, APA 64 may be configured to require first and second forms of user identity to authenticate with first and second ATAs, respectively, before the role will be considered validated.

Another advantage provided by authentication framework 48 is that the authentication policies on the card may reconfigured after initial personalization without losing all of the old user data and settings. For instance, it is possible to strengthen an authentication policy for access to particular data on the card by requiring additional user authentication (e.g., by requiring the user to authenticate by PIN and fingerprint, instead of just PIN) without losing the existing authentication data (e.g., the PIN) for the user. Similarly, an organization may deploy new or updated technologies for biometric authentication on existing smart cards without loosing the already established PKI user credentials (e.g., a private key) within a functional application.

FIGURE 8 depicts an example embodiment of a process state table 150 according to the present invention, used to support shared validation for multiple concurrent host applications. For instance, authentication framework 48 may use process state table 150 to support a single sign-on for all host applications in a predetermined group of applications.

In the example embodiment, each ATA in the framework maintains an authentication state. Upon successful authentication of a user identification record (e.g., PIN, fingerprint, etc.), an ATA sets the validation state to true. To improve the usability of the framework in the context of multi-user smart card applications, the ATA may also provide a mechanism for storing the name of the user whose identification record the ATA contains. The user name may be a byte string capable of representing multi-byte characters.

To ensure proper operation in the context of a multi-process environment on the host, the ATA may allow host processes to identify themselves in terms of a cryptographically strong ID (e.g., a byte array) while using the ATA. The ATA may use a data structure such as process state table 150 to maintain a separate authentication state for each process ID. The process ID may be referred to more generally as a tag. The tag may be different from the process ID set for the process by the host OS. For example, the tag may be negotiated and exchanged using some cryptographic algorithm for secret exchange between the host application and any of the CAA's that the host is engaging. When the host process authenticates to the ATA for the role defined by the CAA, it should supply also the same tag to that ATA, so that when the CAA asks the ATA (via the APA) if the process with the specified tag has been authenticated, the ATA will be able to match the ID supplied by the CAA with the one supplied to the ATA by the host process during authentication and respond accordingly. It is up to the processes on the host to share or protect the tag established by a given process for communicating with a CAA and/or an ATA from the framework.

In the example embodiment, the process state table 150 maintained by each ATA lists the tag for each process the ATA is servicing and the corresponding authentication states. The process state may be initialized to Inactive with a corresponding authentication state set to false. An ATA may add a new tag to process state table 150 only after an authentication request from the host succeeds. When a tag is added, the process state is Active and its authentication state is true. Because the memory resources available to the ATA may be rather limited, the ATA may implement an appropriate resource management scheme for tags.

In the example embodiment, each tag has one of four possible process states: Active, Suspended, Inactive, and Deleted. The Active state is initial and its authentication state is true. The Deleted state is final and does not have an associated authentication state. A process reaches this state when it is discarded from the ATA.

An ATA may provide various methods for process state management, such as reset(), suspend(), and is Verified(). An ATA may also provide various procedures for process state management. Alternatively, process state table 150 may be reset (e.g., emptied) when the card is removed from the reader and this may be also a last-resort garbage collection technique for the ATA. When a command is issued to query the authentication state (e.g., is Validated()), the ATA may first transition the process state to the new one and then report the authentication state to the caller.

A process that is added to the list after successful authentication is in an Active state. When a new tag is requested to be added, the ATA may use available free slots from a pre-allocated storage area for process state table 150. If, however, free slots are not available, the ATA may reuse the slots of any processes that are either in a Inactive or Suspended state, in this order. The tags can be ordered by the last time they accessed the ATA with an authentication request. Consequently, the longest inactive process from the Inactive or Suspended state can be reused first. Garbage collection for Active processes may occur only after a substantial (but configurable) time of inactivity elapses.

Although the present invention has been described with reference to various example embodiments, those with ordinary skill in the art will understand that numerous variations of those embodiments could be practiced without departing from the scope and spirit of the present invention. For example, although the term "smart card" is frequently used to refer to a credit card sized device including an integrated circuit with the processing resources, for purposes of this disclosure, the term "smart card" is not limited to devices with that configuration and includes similar devices with other shapes or carriers, such as rings, pendants, etc.

It should also be noted that the hardware and software components depicted in the example embodiment represent functional elements that are reasonably self-contained so that each can be designed, constructed, or updated substantially independently of the others. In alternative embodiments, however, it should be understood that the components may be implemented as hardware, software, or combinations of hardware and software for providing the functionality described and illustrated herein. Alternative embodiments are not limited to the Java Card Runtime Environment and may be implemented on alternative operating environments for smart cards. Alternative embodiments are also not limited to the authentication technologies based upon PIN or biometric data as described in the example embodiments here.

In addition, although user authentication is performed in the ATA the example embodiments described above, in alternative embodiments, some or all of the processing required for authentication may be performed off card. For example, types of authentication that require substantial processing resources, such as DNA matching algorithms, may be performed by an external device, such as the host. The external device may provide a service for performing authentication calculations or other authentication processing, and the authentication framework on the card may communicate with the off-card service to take advantage of greater processing resources, such as capacity or computing power. In certain embodiments, the external device may return an authentication result (e.g., pass or fail) to the ATA, and the ATA may operate in the manner of a thin client, simply passing the authentication result on to the APA.

Alternative embodiments of the invention also include computer-usable media encoding logic such as computer instructions for performing the operations of the invention. Such computer-usable media may include, without limitation, storage media such as floppy disks, hard disks, CD-ROMs, read-only memory, and random access memory; as well as communications media such as wires, optical fibers, microwaves, radio waves, and other electromagnetic or optical carriers.

Many other aspects of the example embodiments may also be changed in alternative embodiments without departing from the scope and spirit of the invention. The scope of the invention is therefore not limited to the particulars of the embodiments or implementations illustrated herein, but is defined by the appended claims.

## Claims

1. A smart card that features a generalized authentication framework, the smart card comprising:
processing resources including memory and an instruction processor;
an authentication technology applet (ATA) stored in the memory;
authentication data stored in the memory as part of the ATA;
authentication instructions within the ATA that receive user input from a host via a first application protocol data unit (APDU) interface, authenticate user identity based on the authentication data and the user input, and return an authentication result to the host via the first APDU interface;
an authentication policy applet (APA) stored in the memory;
a card application applet (CAA) stored in the memory, wherein the CAA communicates with the host via a second APDU interface, and the CAA enforces security according to a predefined user role;
security configuration data stored in the memory as part of the APA, wherein the security configuration data includes security configurations that define relationships between user roles for CAAs and corresponding authentication requirements, and wherein at least one of the security configurations associates the predefined user role for the CAA with an application identifier (AID) for the ATA;
the APA including an internal interface, wherein the APA receives a call for role validation from the CAA via the internal interface, and the APA provides a gateway between the CAA and the ATA, such that:
in response to receiving the call for role validation, the APA accesses the security configuration data to identify the ATA associated with the predefined user role for the CAA;
in response to identifying the ATA, the APA communicates with the identified ATA to obtain an authentication status;
in response to obtaining the authentication status, the APA uses the authentication status and the authentication requirements for the predefined user role to determine a role validation result;
in response to determining the role validation result, the APA returns the role validation result to the CAA; and
the user input for user authentication does not pass through the CAA.

2. A smart card that features a generalized authentication framework, the smart card comprising:
an authentication technology applet (ATA) that provides a technology-specific authentication service;
an authentication policy applet (APA) that provides a technology-independent authentication service; and
a card application applet (CAA) that uses the technology-independent authentication service provided by the APA.

3. The smart card of Claim 2, further comprising:
processing resources including memory and an instruction processor; and wherein:
the memory contains the CAA, the APA, and the ATA;
the CAA provides a protected service for a user;
the CAA provides a first external interface for communication with a host;
the APA provides an internal interface;
the ATA provides a second external interface;
the CAA communicates with the APA via the internal interface to determine whether the user is currently validated;
the CAA provides the protected service for the host via the first external interface if the user is currently validated; and
if the user is not currently validated, the ATA receives a host request for user authentication via the second external interface, such that the host request for user authentication may be processed by the ATA without participation by the CAA.

4. The smart card of Claim 3, wherein:
the memory contains computer instructions that, when executed by the instruction processor, provide a Java card runtime environment (JCRE);
the JCRE provides an application firewall that separates the CAA, the APA, and the ATA;
the first and second external interfaces comprise Java application protocol data unit (APDU) interfaces; and
the internal interface comprises a sharable interface.

5. The smart card of Claim 3, wherein:
the memory contains user authentication data;
the ATA determines whether the user is currently authenticated, based on the user authentication data and input data received from the host via the second external interface;
the APA comprises a security configuration for the CAA; and
the APA determines whether the user is currently validated, based on the data that indicates whether the user is currently authenticated and the security configuration for the CAA.

6. The smart card of Claim 3, wherein:
the APA comprises a security configuration that associates the CAA with first and second ATAs, wherein the first and second ATAs utilize different authentication technologies;
the memory contains user authentication data for each of the first and second ATAs; and
the APA determines whether the user is currently validated, based on data from first ATA indicating whether the user is currently authenticated and data from the second ATA indicating whether the user is currently authenticated, according to the security configuration for the CAA.

7. The smart card of Claim 3, wherein:
the CAA comprises one CAA among multiple CAAs stored in the memory;
the ATA comprises one ATA among multiple ATAs stored in the memory; and
the memory further comprises one or more data structures with data that encodes relationships comprising:
relationships between the CAAs and user roles; and
relationships between the user roles and the ATAs.

8. The smart card of Claim 3, further comprising:
one or more security configurations, stored in the memory, that define one or more user roles and one or more corresponding authentication requirements.

9. The smart card of Claim 3, wherein:
the APA further provides a third external interface for receiving personalization commands for defining a security configuration; and
the APA provides validation for the CAA, based on the security configuration.

10. The smart card of Claim 9, wherein the APA allows the security configuration to be modified and functionality of the CAA to be retained without modifying the CAA.

11. The smart card of Claim 3, wherein:
the ATA provides the APA with a Boolean user authentication result; and
the APA provides the CAA with a Boolean role validation result.

12. A method for enforcing user validation in a smart card with a generalized authentication framework, the method comprising:
using an authentication technology applet (ATA) to provide a technology-specific authentication service;
using an authentication policy applet (APA) to provide a technology-independent authentication service; and
using the technology-independent authentication service provided by the APA at a card application applet (CAA) to determine user validation.

13. The method of Claim 12, wherein the technology-independent authentication service provided by the APA comprises implementation of a technology-independent authentication policy.

14. The method of Claim 12, further comprising:
associating a role with the CAA; and
wherein the operation of using the APA to provide the technology-independent authentication service comprises using the role associated with the CAA to provide the technology-independent authentication service.

15. The method of Claim 12, wherein the operation of using the ATA to provide the technology-specific authentication service consists in:
providing authentication based on a personal identification number (PIN) authentication technology, or on a biometric authentication technology.

16. A method for enforcing user validation in a smart card with a generalized authentication framework, the method comprising
communicating from a card application applet (CAA) to a authentication policy applet (APA) via an internal interface of the APA to determine whether a user is currently validated;
if the user is currently validated, providing a host with a protected service from the CAA via an external interface of the CAA;
if the user is not currently validated, receiving a host request for user authentication at an authentication technology applet (ATA) via an external interface of the ATA; and
processing the host request for user authentication at the ATA without participation by the CAA.

17. The method of Claim 16, for use in a smart card with a Java card runtime environment (JCRE) that provides an application firewall which separates the CAA, the APA, and the ATA, wherein:
the operation of communicating from the CAA to the APA via the internal interface of the APA comprises communicating with the APA via a Java sharable interface of the APA;
the operation of providing the host with the protected service comprises communicating with the host via a Java application protocol data unit (APDU) interface of the CAA; and
the operation of receiving the host request for user authentication comprises receiving the host request for user authentication via an APDU interface of the ATA.

18. The method of Claim 16, further comprising:
in response to determining that the user is not currently validated, returning a current validation state to the host via the external interface of the CAA, together with an application identifier for the host to use for communicating with the ATA.

19. The method of Claim 16, further comprising:
in response to receiving a validation call at the ATA from the CAA via the internal interface of the APA, communicating from the APA to the ATA via an internal interface of the ATA to obtain data that indicates whether the user is currently authenticated; and
determining at the APA whether the user is currently validated, based on the data that indicates whether the user is currently authenticated.

20. The method of Claim 16, further comprising:
determining at the APA whether the user is currently validated, based on a security configuration in the APA that defines a user role and a corresponding validation requirement for the CAA, and based on data from the ATA that indicates whether the user is currently authenticated.

21. The method of Claim 20, further comprising:
receiving a command from the host via an APDU interface of the APA; and
in response to the command from the host, modifying the security configuration to associate a new ATA with the CAA, without modifying or disabling the CAA.

22. The method of Claim 16, further comprising the operation of supporting multiple concurrent validations for multiple host applications.

23. A computer program product that provides an authentication framework for a smart card, comprising a computer readable medium having thereon computer program code means, when said program is loaded in the memory of the smart card to make the smartcard execute the method for enforcing user validation as recited in any of the claims 16 to 22.
